# EUROPÄISCHE PATENTANMELDUNG

(11) **EP 0 715 061 A1**
(43) Veröffentlichungstag der Anmeldung: **05.06.1996**
(21) Anmeldenummer: 95117477.0
(22) Anmeldetag: 07.11.1995
(51) Int. Cl.: F01N 3/02, F02B 37/12

(54) **Abgasnachbehandlungssystem eines ladedruckbetriebenen Verbrennungsmotors mit Partikelfilter und Brenner**

(30) Priorität: 03.12.1994 DE 4443133
(71) Anmelder: Firma J. Eberspächer, D-73730 Esslingen (DE)
(72) Erfinder: Eberspach, Günter, D-72649 Wolfschlugen (DE)

(57) **Zusammenfassung**

Bei einem Abgasnachbehandlungssystem (1) eines ladedruckbetriebenen Verbrennungsmotors (2) mit Partikelfilter (3) und vorgeordnetem Brenner (4) zur thermischen Regeneration des Partikelfilters wird erfindungsgemäß der Brenner (4) durch den Lader (5). (Abgasturbolader oder mechanisch betriebener Lader) des Verbrennungsmotors (2) mit Verbrennungsluft versorgt, welche für einen Regenerationsbetrieb des Partikel- oder Rußfilters benötigt wird. Dadurch kann ein Brennergebläse bekannter Bauart entfallen.

## Beschreibung

Die Erfindung betrifft ein Abgasnachbehandlungssystem eines ladedruckbetriebenen Verbrennungsmotors, mit einem Partikelfilter nebst vorgeordnetem Brenner zur thermischen Regeneration des Partikelfilters.

Partikelfilteranlagen sind heute komplexe Abgasnachbehandlungssysteme, die nicht von vornherein in die Entwicklung des Motors und des Fahrzeugs einbezogen werden.

Aufgabe der Erfindung ist die Schaffung eines Abgasnachbehandlungssystems der eingangs genannten Art, welches baulich vereinfacht ist und gleichwohl eine gute thermische Regeneration des Partikelfilters zuläßt.

Gelöst wird die der Erfindung zugrundeliegende Aufgabe durch die im Patentanspruch 1 angegebenen Merkmale.

Vorteilhaft weitergebildet wird der Erfindungsgegenstand durch die Merkmale der Unteransprüche 2 bis 13.

Wesen der Erfindung ist, den Brenner durch den ohnehin vorhandenen Lader des Verbrennungsmotors mit Verbrennungsluft zu versorgen.

Zweckmäßigerweise ist der Brennereingang über eine Druckluftleitung mit dem Lader verbunden, wobei die Druckluftleitung über ein Abzweigventil mit der Ladeluftleitung des Verbrennungsmotors in Verbindung steht.

Das Abzweigventil ist vorzugsweise ein ladedruckgesteuertes Abblaseventil ("waste gate").

Eine Erfindungsvariante kennzeichnet sich dadurch, daß die Druckluftleitung direkt mit dem Brennereingang verbunden ist, während die Motorabgasleitung zwischen Brenner und nachgeordnetem Partikelfilter einmündet.

Eine weitere Variante sieht vor, daß die Druckluftleitung zusammen mit der Motorabgasleitung zum Brennereingang geführt sind.

Schließlich kann vorgesehen sein, die zum Brennereingang führende Druckluftleitung und die zum Partikelfilter führende Motorabgasleitung über eine Luftverteilereinrichtung miteinander zu verbinden.

Die Luftverteilereinrichtung umfaßt zweckmäßigerweise eine Verbindungsleitung zwischen Druckluftleitung und Motorabgasleitung, in welcher eine erste Luftverteilerklappe oder ein erstes Ventil angeordnet ist. In der Druckluftleitung zwischen Verbindungsleitung und Brennereingang befindet sich bevorzugt eine zweite Klappe oder ein zweites Ventil, wobei auch in der zum Partikelfilter führenden Motorabgasleitung zwischen Verbindungsleitung und Partikelfilter eine dritte Klappe oder ein drittes Ventil angeordnet sein kann.

Der Lader des Verbrennungsmotors kann ein mechanisch angetriebener Lader, z.B. ein Spirallader, sein, oder alternativ ein an sich bekannter Abgasturbolader.

Die Druckluftleitung zum Brenner kann eine Drossel oder ein Druckminderventil zusätzlich enthalten, wobei alternativ auch das Abzweigventil mit der Drossel oder dem Druckminderventil baulich vereint sein kann.

Durch die Erfindung kann die bei heutigen Vollstromanlagen notwendige Luftversorgung des Brenners also vom ohnehin vorhandenen Aufladesystem des Motors erfolgen, so daß in vorteilhafter Weise ein separates Gebläse nach dem Stand der Technik entfallen kann. Dadurch wird die Abgasnachbehandlungsanlage und insbesondere das Brennersystem durch Reduzierung von Bauteilen baulich deutlich vereinfacht. Das erfindungsgemäße System kann aufgrund der Einfachheit auch in kleineren Fahrzeugtypen, z.B. in Personenkraftwagen, leichten Nutzfahrzeugen und Transportern, eingesetzt werden. Die brennerthermische Regeneration von Rußfiltern erfolgt durch die Erfindung qualitativ in gleicher Weise, wie dies bei konventionellen Brennersystemen der Fall ist.

Durch die Erfindung wird die Erkenntnis ausgenutzt, daß heutige und zukünftige Abgasbestimmungen für Dieselmotoren sowohl bei Lastkraftwagen, als auch bei Personenkraftwagen Motoren mit Abgasturbolader zunehmend verwendet werden. Ist dieses technische Aggregat vorhanden, wird dieses gleichzeitig zur Luftversorgung verwendet. Durch geeignete Auslegung und Abstimmung des Abgasturboladers kann auch die Verbrennungsluft für den Regenerationsbrenner vom Abgasturbolader mitbeliefert werden. Die Abzweigung der Verbrennungsluft erfolgt zweckmäßig durch ein ladedruckgesteuertes "saugseitig" angeordnetes Abblaseventil. Der Turbolader ist so auszulegen, daß der gewünschte Ladedruck schon früh erreicht wird und somit einem großen Bereich des Motorkennfeldes Luft für den Regenerationsbrenner zur Verfügung stellt. Diese kann nun direkt dem Brenner zugeführt werden (erste Erfindungsvariante) oder vor dem Partikelfilter ins Abgas geleitet werden, um den Sauerstoffgehalt zu erhöhen (zweite Erfindungsvariante). Eine dritte Erfindungsvariante besteht darin, den Luftstrom durch Integration von Klappen oder Ventilen zwischen Brenner und Filter aufzuteilen, wodurch die Möglichkeit gegeben ist, die Luftzufuhr zum Brenner zu regulieren.

Die Erfindung wird nachfolgend anhand von Ausführungsbeispielen unter Bezugnahme auf die beigefügte Zeichnung näher erläutert; es zeigen:
- Fig. 1: ein Abgasnachbehandlungssystem für einen Verbrennungsmotor mit Turbolader in schematischer Darstellung,
- Fig. 2: ein Abgasnachbehandlungssystem in weiterer Erfindungsalternative, und
- Fig. 3: ein Abgasnachbehandlungssystem in einer dritten Erfindungsalternative.

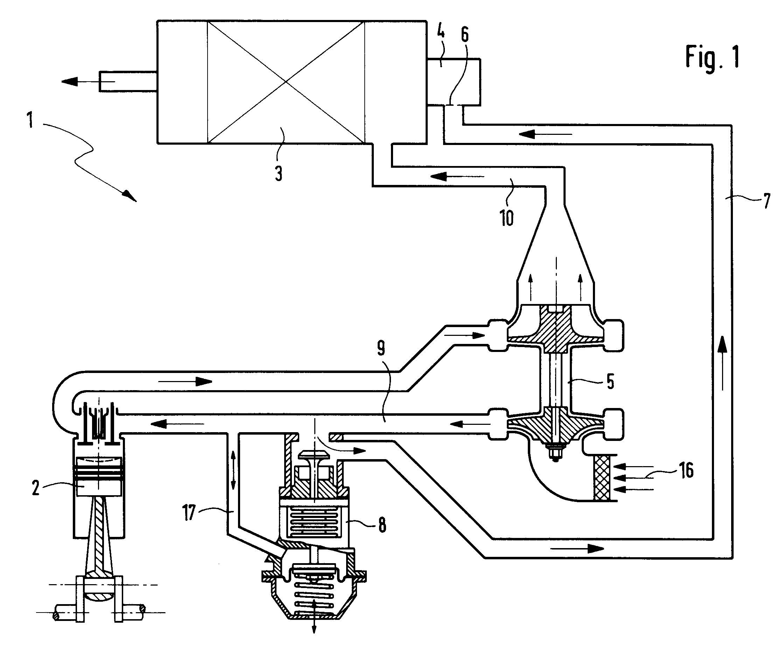

Gemäß Fig. 1 umfaßt ein Abgasnachbehandlungssystem 1 für einen Verbrennungsmotor 2 in Form eines Dieselmotors mit einem Lader 5 in Form eines Turboladers ein Rohrsystem im Abgasstrang, in welchem ein Partikelfilter 3 mit vorgeordnetem Brenner 4 vorgesehen ist. Der Brenner 4 dient zur thermischen Regeneration des Partikelfilters 3 bzw. des Rußfilters, um das Abgas im wesentlichen ohne Rußfilterpartikel in die Atmosphäre abzugeben.

Der Turbolader verdichtet Atmosphärenluft 16 und speist diese mit erhöhtem Ladedruck über eine Ladeluftleitung 9 dem Verbrennungsmotor 2 ein, dessen Abgase in einer Motorabgasleitung 10 nach dem Turbolader am Brenner 4 vorbei direkt vor dem Partikelfilter 3 eingeleitet werden, um das Abgas im Betrieb von Rußpartikeln zu befreien.

In der Ladeluftleitung 9 befindet sich ein Abzweigventil 8 in Form eines Abblaseventils ("waste gate"), welches eine direkte Leitungsverbindung zum Regenerationsbrenner 4 in Form einer Druckluftleitung 7 einrichtet. Das Abblaseventil ist hierbei ladedruckgesteuert, und besitzt mithin eine Steuerleitung 17 in einem Anschluß zur Ladeluftleitung 9. In der Druckluftleitung 7 kann eine Drossel oder ein Druckminderventil angeordnet sein, so daß die durch den Lader 5 des Verbrennungsmotors 2 dem Brenner 4 angelieferte Verbrennungsluft keinem erhöhten Druckgefälle ausgesetzt ist, d.h. der Turbolader also ein herkömmliches Brennergebläse ersetzt. Der Turbolader ist so ausgelegt, daß der gewünschte Ladedruck sehr früh erreicht wird und mithin in einem großen Bereich des Motorkennfeldes Luft für den Regenerationsbrenner zur Verfügung steht.

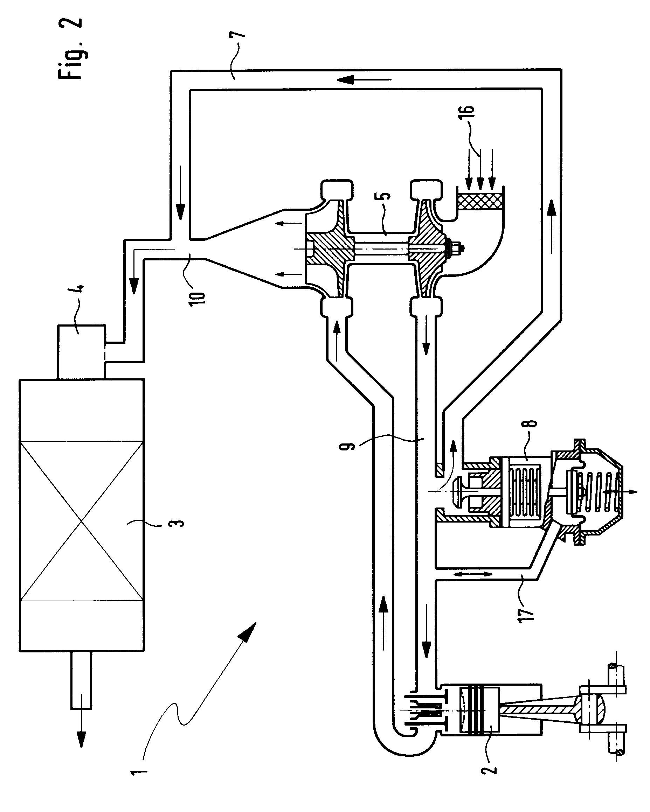

Das in Fig. 2 veranschaulichte Ausführungsbeispiel entspricht im wesentlichen demjenigen nach Fig. 1 und besitzt im Unterschied hierzu eine Motorabgasleitung 10, welche zusammen mit der Druckluftleitung 7 zum Brennereingang 6 geleitet wird, um den Sauerstoffgehalt im Brenner zu erhöhen.

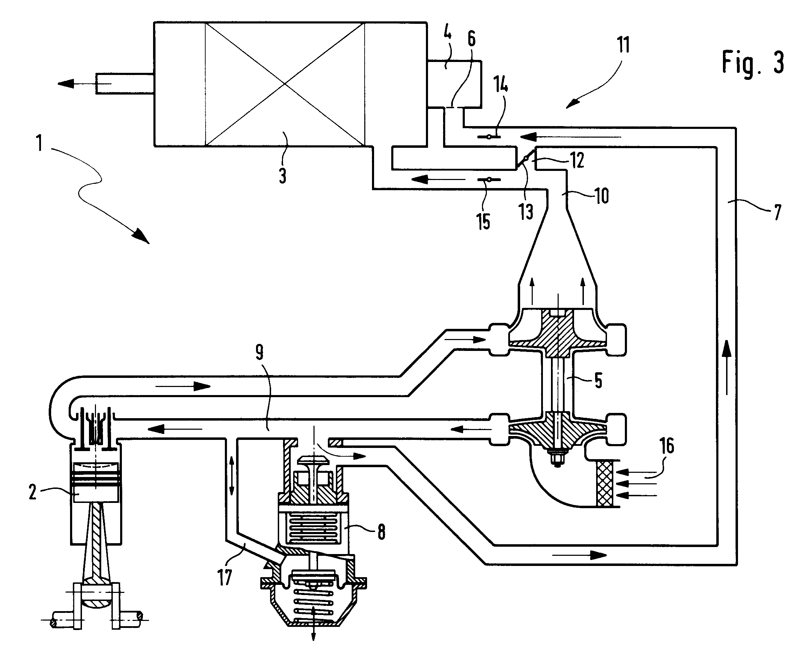

Das in Fig. 3 dargestellte Ausführungsbeispiel stellt im wesentlichen eine Kombination der Ausführungsvarianten nach den Fig. 1 und 2 dar und besitzt mithin eine direkte Druckluftleitung 7 zum Brennereingang 6, sowie eine direkte Motorabgasleitung 10 zum Partikelfilter 3. Zwischen der Druckluftleitung 7 und der Motorabgasleitung 10 befindet sich eine Verbindungsleitung 12, wobei im System eine Luftverteilereinrichtung 11 in Form von diversen Klappen oder Ventilen angeordnet ist.

Insbesondere befindet sich in der Verbindungsleitung 12 eine erste Luftverteilerklappe 13 oder ein erstes Ventil, welches zwischen einer vollständig die Verbindungsleitung 12 schließenden Stellung in eine geöffnete Stellung stufenlos verstellt werden kann, um den vollen Strömungsquerschnitt der Verbindungsleitung 12 freizugeben.

Eine der ersten Luftverteilerklappe 13 entsprechende zweite Klappe 14 ist in der Druckluftleitung 7 zwischen Verbindungsleitung 12 und Brennereingang 6 vorgesehen, so daß auch der direkte Zugang zum Brenner 4 vollständig geöffnet oder geschlossen werden kann.

Ein weiteres drittes diesbezügliches Bauelement ist in der zum Partikelfilter 3 führenden Motorabgasleitung 10 unmittelbar nach der Verbindungsleitung 12 und dem Partikelfilter 3 in Form einer dritten Klappe 15 vorgesehen.

Ersichtlich kann durch entsprechende Öffnung oder Schließung der Klappen 13, 14 und 15 das Abgasnachbehandlungssystem nach Art der Fig. 1 und alternativ nach Art der Fig. 2 betrieben werden, wie auch ein "Mischbetrieb" möglich ist, wodurch die Möglichkeit gegeben ist, in einer Zwischenstellung der Klappen den Luftstrom zwischen Brenner und Filter aufzuteilen, um dadurch die Luftzufuhr zum Brenner stufenlos zu regulieren.

Es sei noch angemerkt, daß in den Unteransprüchen enthaltene selbständig schutzfähige Merkmale trotz der vorgenommenen formalen Rückbeziehung auf den Hauptanspruch entsprechenden eigenständigen Schutz haben sollen. Im übrigen fallen sämtliche in den gesamten Anmeldungsunterlagen enthaltenen erfinderischen Merkmale in den Schutzumfang der Erfindung.

## Patentansprüche

1. Abgasnachbehandlungssystem (1) eines ladedruckbetriebenen Verbrennungsmotors (2), mit einem Partikelfilter (3) nebst vorgeordnetem Brenner (4) zur thermischen Regeneration des Partikelfilters,
dadurch gekennzeichnet,
daß der Brenner (4) durch den Lader (5) des Verbrennungsmotors (2) mit Luft versorgt wird.

2. Abgasnachbehandlungssystem nach Anspruch 1,
dadurch gekennzeichnet,
daß der Brennereingang (6) über eine Druckluftleitung (7) mit dem Lader (5) verbunden ist, wobei die Druckluftleitung (7) über ein Abzweigventil (8) mit der Ladeluftleitung (9) des Verbrennungsmotors (2) in Verbindung steht.

3. Abgasnachbehandlungssystem nach Anspruch 2,
dadurch gekennzeichnet,
daß das Abzweigventil ein ladedruckgesteuertes Abblaseventil ist.

4. Abgasnachbehandlungssystem nach Anspruch 2 oder 3,
dadurch gekennzeichnet,
daß die Druckluftleitung (7) direkt mit dem Brennereingang (6) verbunden ist, während die Motorabgasleitung (10) zwischen Brenner (4) und nachgeordnetem Partikelfilter (3) einmündet (Fig. 1).

5. Abgasnachbehandlungssystem nach Anspruch 2 oder 3,
dadurch gekennzeichnet,
daß die Druckluftleitung (7) zusammen mit der Motorabgasleitung (10) zum Brennereingang (6) geführt sind (Fig.2).

6. Abgasnachbehandlungssystem nach Anspruch 2 oder 3,
dadurch gekennzeichnet,
daß die zum Brennereingang (6) führende Druckluftleitung (7) und die zum Partikelfilter (3) führende Motorabgasleitung (10) über eine Luftverteilereinrichtung (11) miteinander verbunden sind (Fig.3).

7. Abgasnachbehandlungssystem nach Anspruch 6,
dadurch gekennzeichnet,
daß die Luftverteilereinrichtung (11) eine Verbindungsleitung (12) zwischen Druckluftleitung (7) und Motorabgasleitung (10) aufweist, in welcher eine erste Luftverteilerklappe (13) oder ein erstes Ventil angeordnet ist (Fig. 3).

8. Abgasnachbehandlungssystem nach Anspruch 6 oder 7,
dadurch gekennzeichnet,
daß in der Druckluftleitung (7) zwischen Verbindungsleitung (12) und Brennereingang (6) eine zweite Klappe (14) oder ein zweites Ventil angeordnet ist (Fig. 3).

9. Abgasnachbehandlungssystem nach einem der Ansprüche 6-8,
dadurch gekennzeichnet,
daß in der zum Partikelfilter (3) führenden Motorabgasleitung (10) zwischen Verbindungsleitung (12) und Partikelfilter (13) eine dritte Klappe (15) oder ein drittes Ventil angeordnet ist (Fig. 3).

10. Abgasnachbehandlungssystem nach einem der Ansprüche 1-9,
dadurch gekennzeichnet,
daß der Lader (5) ein mechanisch angetriebener Lader ist.

11. Abgasnachbehandlungssystem nach einem der Ansprüche 1-9,
dadurch gekennzeichnet,
daß der Lader (5) ein Abgasturbolader ist.

12. Abgasnachbehandlungssystem nach einem der Ansprüche 1-11, dadurch gekennzeichnet,
daß in der Druckluftleitung (7) eine Drossel oder ein Druckminderventil angeordnet ist.

13. Abgasnachbehandlungssystem nach Anspruch 12,
dadurch gekennzeichnet,
daß die Drossel oder das Druckminderventil mit dem Abzweigventil (8) baulich vereint ist.
